# EUROPÄISCHE PATENTSCHRIFT

(11) **EP 3 679 788 B1**
(45) Veröffentlichungstag und Bekanntmachung des Hinweises auf die Patenterteilung: **11.08.2021**
(21) Anmeldenummer: 19212659.7
(22) Anmeldetag: 29.11.2019
(51) Int. Cl.: A01M 7/00

(54) **SCHWINGUNGSTILGUNG EINES VERTEILERGESTÄNGES EINER LANDWIRTSCHAFTLICHEN VERTEILMASCHINE**
VIBRATION DAMPER OF A DISTRIBUTOR SYSTEM OF RODS ON AN AGRICULTURAL SPREADER
AMORTISSEMENT DES VIBRATIONS D'UNE TRINGLERIE D'ÉPANDAGE D'UNE MACHINE D'ÉPANDAGE AGRICOLE

(30) Priorität: 10.01.2019 DE 102019200252
(43) Veröffentlichungstag der Anmeldung: 15.07.2020
(73) Patentinhaber: Deere & Company, Moline, IL 61265 (US)
(72) Erfinder: Jung, Benedikt, 68163 Mannheim (DE); Waibel, Christian, 68163 Mannheim (DE); Seimetz, Martin, 68163 Mannheim (DE)
(74) Vertreter: Holst, Sönke

(56) Entgegenhaltungen:
- EP-A1- 3 384 768
- DE-A1- 10 054 285
- DE-A1-102008 007 312
- KR-A- 20120 140 626

## Beschreibung

Die Erfindung betrifft eine landwirtschaftliche Verteilmaschine mit einem Verteilergestänge und einer Einrichtung zur aktiven Schwingungstilgung von im Verteilergestänge auftretenden Schwingungen, die einen Sensor zur Erfassung einer Schwingung des Verteilergestänges, eine mit dem Sensor verbundene elektronische Steuereinrichtung und einen durch die Steuereinrichtung betätigbaren Aktor zur Verstellung einer mit dem Verteilergestänge gekoppelten, beweglichen Masse umfasst, wobei die Steuereinrichtung betreibbar ist, den Aktor im Sinne einer Verminderung einer mit dem Sensor erfassten Schwingung anzusteuern.

### Stand der Technik

Feldspritzen werden in der Landwirtschaft verwendet, um zur Düngung eines Feldes oder zur Bekämpfung dort vorhandener, unerwünschter Lebewesen (wie Wildkräuter, Pilze oder Insekten) Spritzmittel auf einem Feld zu verteilen. Sie sind als an ein Trägerfahrzeug angebaute oder aufgesattelte, selbstfahrende oder gezogene Ausführungsformen verfügbar. Um eine hinreichende Arbeitsbreite von einigen 10 m zu erzielen, sind sie mit Spritzdüsen tragenden Gestängen ausgestattet, die sich zwischen einer eingefalteten Transportposition für eine Straßenfahrt und einer ausgefahrenen Arbeitsposition für den Feldbetrieb verstellen lassen. Die Gestänge sind üblicherweise in vertikaler Richtung relativ steif gestaltet, um einen konstanten Abstand zwischen dem Boden und den Spritzdüsen und somit ein Einhalten der gewünschten Ausbringraten zu gewährleisten, während sie aus Gewichts- und Kostengründen in Vorwärtsrichtung weniger steif gestaltet werden. Das hat jedoch zur nachteiligen Folge, dass die Gestänge in Vorwärtsrichtung in Schwingbewegungen geraten können, z.B. wenn die Feldspritze oder ein sie tragendes Fahrzeug verzögert oder beschleunigt oder um eine Kurve fährt. Die Amplituden derartiger Schwingbewegungen können in der Größenordnung von 1 m oder mehr liegen, was zur unerwünschten Folge hat, dass die gewünschten Ausbringraten lokal nicht eingehalten werden.

Im Stand der Technik wurden einige Maßnahmen vorgeschlagen, um derartige Schwingbewegungen passiv oder aktiv zu bekämpfen.

So schlägt die DE 100 54 285 A1 vor, die Bewegungen des Gestänges in Vorwärtsrichtung zu erfassen und durch gegensinnig wirkende Aktoren zu tilgen, welche im Abstand von der Längsachse der Feldspritze an den beiden (links und rechts der Längsachse angeordneten) Gestängehälften angreifen und anderen Endes am Gestell der Feldspritze angelenkt sind. Eine derartige Anordnung wird auch in der Zeitschrift Landtechnik 2015, Seiten 132 bis 138 beschrieben.

Weiterhin schlägt die DE 10 2008 007 312 A1 vor, an den äußeren Enden der Gestängehälften jeweils einen Schwingungstilger anzubringen, der sich aus einer Masse und einer Feder zusammensetzt. Die Masse wird nicht aktiv angetrieben und soll selbsttätig die Schwingbewegungen des Gestänges auslöschen. Eine derartige Anordnung wird auch in der Zeitschrift Landtechnik 2015, Seiten 132 bis 138 und in der US 2014/0263766 A1 beschrieben. Die EP 2 526 755 A1, EP 2 589 289 A2, EP 2 835 050 A1 und die EP 2 829 177 A1 schlagen vor, innerhalb des Gestänges Dämpfungselemente anzubringen, deren Dämpfungseigenschaften in Abhängigkeit von der Bewegungsart der Feldspritze veränderbar sind.

Die DE 102015 113721 A1 und DE 10 2017 114 637 A1 schlagen zur aktiven Schwingungstilgung vor, das Gestänge insgesamt in Vorwärtsrichtung gegenüber dem Gestell der Feldspritze zu bewegen, um die Auswirkungen linearer Verzögerungen oder Beschleunigungen der Feldspritze auf das Gestänge zu vermindern, während die DE 10 2014 203 005 B3 vorschlägt, einen Aktor zur Verstellung eines höhenverstellbaren oder um eine in Vorwärtsrichtung verlaufende Achse drehbaren Gestänges einer Feldspritze auf einen Verstellbefehl hin mit einem ersten Signal zu beaufschlagen und anschließend mit einem zweiten Signal, das dazu führt, das die durch das erste Signal im Gestänge induzierte Schwingung wieder ausgelöscht wird.

Schließlich wird in der DE 10 2015 204 992 B3 vorgeschlagen, die Schwingung des Gestänges durch Luft ausstoßende Düsen zu tilgen, die am Gestänge angebracht sind, während die als gattungsbildend angesehene WO 2012/146255 A1 vorschlägt, vertikale Schwingungen im Gestänge einer Feldspritze mittels einer in Längsrichtung des Gestänges beweglichen Masse zu dämpfen. Weitere relevante Stand der Technik Dokumente auf diesem technischen Gebiet sind die EP 3 384 768 A1 und KR 2012 0140626 A.

### Aufgabe

Die Dämpfung der Schwingungen durch zwischen dem Fahrgestell und dem Gestänge angeordnete, aktiven Aktoren erfordert eine längenverstellbare Verbindung zwischen dem Gestänge und dem Fahrgestell der Feldspritze, die schon aufgrund ihrer Länge recht aufwändig ist, was analog auch für die aktive Schwingungstilgung durch Verstellung der Position des gesamten Gestänges gegenüber dem Fahrgestell gilt. Die Wirkung der passiven Dämpfungselemente ist nicht immer befriedigend und die Schwingungstilgung durch Luftdüsen hat nur einen schlechten Wirkungsgrad. Schließlich eignet sich die Anordnung nach WO 2012/146255 A1 nur zur Dämpfung vertikaler Schwingungen.

Die der Erfindung zu Grunde liegende Aufgabe wird darin gesehen, eine landwirtschaftliche Verteilmaschine mit einem Gestänge und ein entsprechendes Verfahren bereitzustellen, bei welcher die erwähnten Nachteile nicht oder in vermindertem Maße auftreten.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine landwirtschaftliche Verteilmaschine ist mit einem Verteilergestänge und einer Einrichtung zur aktiven Schwingungstilgung von im Verteilergestänge auftretenden Schwingungen ausgestattet, die einen Sensor zur Erfassung einer Schwingung des Verteilergestänges, eine mit dem Sensor verbundene elektronische Steuereinrichtung und einen durch die Steuereinrichtung betätigbaren Aktor zur Verstellung einer mit dem Verteilergestänge gekoppelten, entlang der Richtung der zu dämpfenden Schwingung beweglichen Masse umfasst, wobei die Steuereinrichtung betreibbar ist, den Aktor im Sinne einer Verminderung einer mit dem Sensor erfassten Schwingung anzusteuern.

Es wird demnach eine aktive Schwingungsdämpfung des Verteilergestänges mit einer mit dem Verteilergestänge gekoppelten Masse vorgeschlagen, die durch einen Aktor entlang der Richtung der zu dämpfenden Schwingung verstellbar ist. Der Aktor wird durch eine elektronische Steuereinheit basierend auf dem Signal eines zur Erfassung einer eventuellen Schwingung eingerichteten Sensors, bei dem es sich beispielsweise um einen Beschleunigungssensor handeln kann, gegenphasig zur Schwingung angesteuert. Sollte sich das Gestänge demnach beispielsweise in einer Schwingung nach vorn bewegen, wird der Aktor die Masse nach hinten bewegen, um die Schwingung zu dämpfen, und umgekehrt. Analog kann der Aktor die Masse nach unten bewegen, wenn das Gestänge sich nach oben bewegt und umgekehrt. Auf diese Weise wird mit einfachen Mitteln eine effektive Schwingungsdämpfung erreicht, die auch unterschiedliche Schwingungsfrequenzen herunterdämpfen kann.

Vorzugsweise sind je zwei Aktoren und Massen beidseits einer Symmetrieebene des Verteilergestänges angebracht.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf eine landwirtschaftlichen Verteilmaschine mit einer Einrichtung zur Dämpfung von Schwingungen im Verteilergestänge, und
- Fig. 2: eine vergrößerte Darstellung einer Einrichtung zur aktiven Schwingungstilgung des Verteilergestänges.

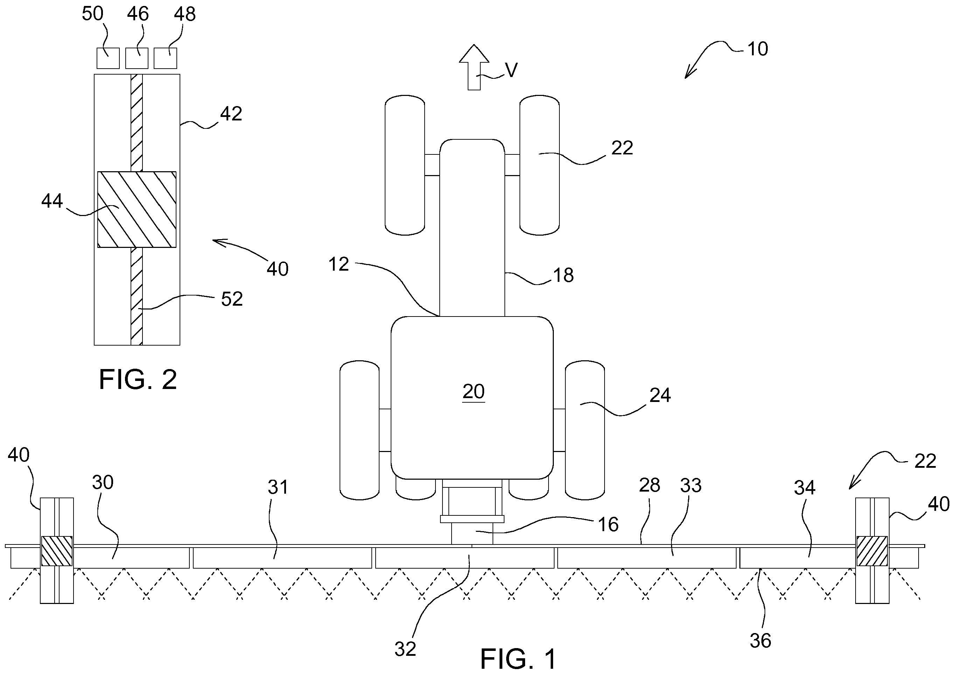

Die Figur 1 zeigt eine seitliche Draufsicht auf eine Kombination 10 aus einem landwirtschaftlichen Ackerschlepper 12 und einer Verteilmaschine 22 in Form einer Feldspritze, die an einem Dreipunktgestänge 16 des Ackerschleppers 12 angebaut ist. Der Ackerschlepper 10 baut sich auf einem tragenden Fahrgestell 18 auf, das sich auf lenkbaren Vorderrädern 22 und antreibbaren Hinterrädern 24 abstützt und eine Kabine 20 trägt, in der sich ein Bedienerarbeitsplatz befindet. Die Verteilmaschine 22 könnte bei einer anderen Ausführungsform durch den Ackerschlepper 12 gezogen werden, d.h. ein Fahrgestell mit Rädern und einer an einer Kupplung des Ackerschleppers 12 angehängte Deichsel umfassen, oder als selbstfahrendes Fahrzeug ausgeführt sein.

Die Verteilmaschine 22 umfasst ein Verteilergestänge 28, das sich aus insgesamt fünf Abschnitten 30 bis 34 zusammensetzt, die in einer einfaltbaren Weise miteinander gekoppelt sind, um die Breite des Verteilergestänges 28 für eine Straßenfahrt auf einen Bruchteil von dessen Arbeitsbreite reduzieren zu können. Entlang der Breite des Verteilergestänges 28 sind Spritzdüsen 36 zur Ausbringung von Spritzmittel auf einem Feld verteilt, wobei die Ausbringraten fest oder georeferenziert oder sensorgesteuert variabel sein können.

Das Verteilergestänge 28 ist in seitlicher Richtung (horizontal und quer zur Vorwärtsrichtung V des Ackerschleppers 12) relativ stabil aufgebaut, was in etwas geringerem Maß auch für die vertikale Richtung gilt. In Vorwärtsrichtung V ist das Verteilergestänge 28 jedoch weniger stabil. Das hat zur Folge, dass bei Beschleunigungen oder Verzögerungen des Ackerschleppers 12 oder anderen Störungen (Kurvenfahrt, Bodenunebenheiten etc.) Schwingungen im Verteilergestänge 28 entstehen können, d.h. das Verteilergestänge 28 verbiegt sich in sich und die die äußeren Enden des Verteilergestänges 28 bewegen sich gegenüber seinem am Ackerschlepper 12 befestigten mittleren Bereich nach vorn und hinten. Derartige Schwingungen haben u.a. die nachteilige Folge, dass einige Stellen des Feldes mit größeren Spritzmittelmengen als erwünscht beaufschlagt werden und andere Stellen wiederum weniger Spritzmittel erhalten als beabsichtigt.

Zur Vermeidung oder Minderung dieser Schwingungen des Verteilergestänges 28 nach vorn und hinten dienen zwei Einrichtungen 40 zur aktiven Schwingungstilgung, von denen jeweils einer in der Nähe eines äußeren Endes des Verteilergestänges 28 angebracht ist. Die Einrichtung 40 zur aktiven Schwingungstilgung umfasst jeweils ein am äußeren Abschnitt 30 bzw. 34 des Verteilergestänges 28 befestigtes Gehäuse 42, in dem eine Masse 44 an einer Führung 52 entlang der Vorwärtsrichtung V verschiebbar gelagert ist, einen Aktor 46 zur Verstellung der Position der Masse 42 innerhalb des Gehäuses 42 entlang der Führung 52, einen Sensor 48 zur Erfassung einer Schwingung und eine elektronische Steuereinheit 50, die mit dem Sensor 48 und dem Aktor 46 verbunden ist. Der Sensor 48 kann beispielsweise ein Trägheits-Beschleunigungssensor sein. Der Aktor 46 kann ein Linearaktor sein, z.B. in Form eines Hydraulikzylinders, oder ein rotierender Aktor, z.B. in Form eines Elektro- oder Hydraulikmotors, der über einen Seilzug oder ein Gewinde oder eine Zahnstange oder dgl. mit der Masse 44 gekoppelt ist. Das Gehäuse 42 kann zur Verbesserung der Beweglichkeit der Masse 44 mit luftdurchlässigen Öffnungen versehen sein oder auch entfallen.

Im Betrieb steuert die Steuereinrichtung 50 den Aktor 46 basierend auf den Signalen des Sensors 48 an. Sollte der Sensor 48 z.B. eine Beschleunigung des Verteilergestänges 28 nach vorn sensieren, veranlasst die Steuereinrichtung 50 den Aktor 46, die Masse 44 nach hinten zu bewegen, und umgekehrt. Auf diese Weise wird die Masse 44 gegenphasig zur Schwingung des Verteilergestänges 28 nach vorn und hinten bewegt und eine eventuelle Schwingung schnell und effektiv gedämpft oder ausgelöscht, um die oben aufgezeigte Problematik zu vermeiden oder zu vermindern.

Es wäre auch denkbar, die Einrichtungen 40 (oder zwei weitere Einrichtungen 40) zur Dämpfung von vertikalen Schwingungen im Verteilergestänge 28 einzusetzen. Die Masse 44 würde dann durch den Aktor 46 in vertikaler Richtung verstellt, gegenphasig zu einer mit dem Sensor 48 detektierten, vertikalen Schwingung des Verteilergestänges. Auch könnte man beide Aktoren 46 gemeinsam oder unabhängig voneinander mit einer einzigen Steuereinrichtung 50 kontrollieren, die sich auch an Bord des Ackerschleppers 12 oder an einer beliebigen Stelle der Verteilmaschine 22 befinden könnte. Auch könnte (unter der Annahme, dass sich beide Hälften des Verteilergestänges 28 gleichförmig bewegen) einer der Sensoren 48 entfallen, oder einer oder beide Sensoren 48 im Abstand vom Aktor 46 und der Masse 44 an einer geeigneten Stelle an Bord des Ackerschleppers 12 oder der Verteilmaschine 22 angebracht werden, die sich auch eignet, die Schwingungen des Verteilergestänges 28 zu erfassen.

## Patentansprüche

1. Landwirtschaftliche Verteilmaschine (22) mit einem Verteilergestänge (28) und einer Einrichtung (40) zur aktiven Schwingungstilgung von im Verteilergestänge (28) auftretenden Schwingungen, die einen Sensor (48) zur Erfassung einer Schwingung des Verteilergestänges (28), eine mit dem Sensor (48) verbundene elektronische Steuereinrichtung (50) und einen durch die Steuereinrichtung (50) betätigbaren Aktor (46) zur Verstellung einer mit dem Verteilergestänge (28) gekoppelten, beweglichen Masse (44) umfasst, wobei die Steuereinrichtung (50) betreibbar ist, den Aktor (46) im Sinne einer Verminderung einer mit dem Sensor (48) erfassten Schwingung des Verteilergestänges (28) anzusteuern, **dadurch gekennzeichnet, dass** der Aktor (46) eingerichtet ist, die Masse (44) entlang der Richtung der zu dämpfenden Schwingung zu verstellen.

2. Verteilmaschine (22) nach Anspruch 1, wobei der Aktor (46) eingerichtet ist, die Masse (44) in vertikaler Richtung oder in Vorwärtsrichtung zu verstellen.

3. Verteilmaschine (22) nach Anspruch 1 oder 2, wobei je zwei Aktoren (46) und Massen (44) beidseits einer Symmetrieebene des Verteilergestänges (28) angebracht sind.

## Claims

1. Agricultural distributing machine (22) with a distributor linkage (28) and with a device (40) for active absorption of vibrations arising in the distributor linkage (28), said device comprising a sensor (48) for detecting a vibration of the distributor linkage (28), an electronic control device (50) connected to the sensor (48), and an actuator (46), capable of being actuated by the control device (50), for relocating a mobile mass (44) which is coupled with the distributor linkage (28), wherein the control device (50) is capable of being operated to drive the actuator (46) in the sense of a lessening of a vibration of the distributor linkage (28), detected with the sensor (48), **characterized in that** the actuator (46) has been set up to relocate the mass (44) along the direction of the vibration to be damped.

2. Distributing machine (22) according to Claim 1, wherein the actuator (46) has been set up to relocate the mass (44) in the vertical direction or in the forward direction.

3. Distributing machine (22) according to Claim 1 or 2, wherein in each instance two actuators (46) and masses (44) have been mounted on both sides of a plane of symmetry of the distributor linkage (28).

## Revendications

1. Machine de distribution agricole (22) comprenant une tige de distribution (28) et un dispositif (40) qui est destiné à amortir activement des vibrations se produisant dans la tige de distribution (28) et qui comporte un capteur (48) destiné à détecter une vibration de la tige de distribution (28), un dispositif de commande électronique (50) connecté au capteur (48) et un actionneur (46) qui peut être actionné par le dispositif de commande (50) et qui est destiné à régler une masse mobile (44) couplée à la tige de distribution (28),
le dispositif de commande (50) pouvant être utilisé pour commander l'actionneur (46) dans le sens d'une réduction d'une vibration de la tige de distribution (28) qui est détectée par le capteur (48), **caractérisée en ce que** l'actionneur (46) est conçu pour déplacer la masse (44) dans la direction de la vibration à amortir.

2. Machine de distribution (22) selon la revendication 1, l'actionneur (46) étant conçu pour déplacer la masse (44) dans la direction verticale ou dans la direction vers l'avant.

3. Machine de distribution (22) selon la revendication 1 ou 2, deux actionneurs (46) et deux masses (44) étant fixés des deux côtés d'un plan de symétrie de la tige de distribution (28).
